# EUROPÄISCHE PATENTSCHRIFT

(11) **EP 3 680 999 B1**
(45) Veröffentlichungstag und Bekanntmachung des Hinweises auf die Patenterteilung: **12.01.2022**
(21) Anmeldenummer: 20160300.8
(22) Anmeldetag: 05.07.2016
(51) Int. Cl.: H02G 1/12

(54) **ABISOLIERWERKZEUG**
STRIPPING TOOL
OUTIL DE DÉNUDAGE

(30) Priorität: 17.07.2015 DE 102015111693; 04.02.2016 DE 102016101940
(43) Veröffentlichungstag der Anmeldung: 15.07.2020
(62) Teilanmeldung aus: 16738708.3
(73) Patentinhaber: Knipex-Werk C. Gustav Putsch KG, 42349 Wuppertal (DE)
(72) Erfinder: Marovic, Filip, 42349 Wuppertal (DE); Pech, Martin, 42349 Wuppertal (DE); Riepe, Bernd, 42389 Wuppertal (DE); Schleiminger, Jan, 42697 Solingen (DE)
(74) Vertreter: Müller, Enno

(56) Entgegenhaltungen:
- WO-A1-2005/025023
- DE-U1-202009 000 142
- GB-A- 2 217 119

## Beschreibung

### Gebiet der Technik

Die Erfindung betrifft ein Abisolierwerkzeug zum Entfernen eines Außenmantels und/ oder einer Aderisolierung eines elektrischen ein- oder mehradrigen Kabels, wobei das Abisolierwerkzeug mittels einer gemeinsamen Schwenkachse miteinander verbundene Hohlkörperteilschalen aufweist, welche zur Bildung eines ein Kabel zumindest teilweise aufnehmenden Hohlkörpers aufeinander zu schwenkbar sind, wobei die Hohlkörperteilschalen zumindest ein Schneidelement aufweisen, wobei die Hohlkörperteilschalen an einer Schalenkante, an welcher die Hohlkörperteilschalen aufeinander zu schwenkbar sind, in Richtung der Schalenkante nebeneinander angeordnete Schneidelemente aufweisen.

### Stand der Technik

Abisolierwerkzeuge der vorgenannten Art sind im Stand der Technik bekannt. Die Druckschrift WO 2005/025023 A1 offenbart beispielsweise ein Abisolierwerkzeug, welches sowohl zum Entfernen eines Außenmantels eines mehradrigen Kabels als auch zur Abisolierung eines einzelnen Kabels verwendet werden kann. Das Abisolierwerkzeug besteht aus zwei an einer Schalenkante verbundenen verschwenkbaren Halbschalen, welche quer zur Längsrichtung der Halbschalen mehrere Schneidelemente aufweisen. Zur Entfernung des Außenmantels bzw. der Aderisolierung wird das Kabel stirnseitig durch eine Öffnung in ein Schneidelement eingelegt. Das Abisolierwerkzeug wird in Umfangsrichtung ergriffen, wobei die Hand eines Nutzers nahezu das gesamte Abisolierwerkzeug umfasst und Daumen und Zeigefinger im Bereich der Stirnseite angeordnete Griffflächen zusammendrücken.

Im Stand der Technik sind benachbarte Schneidelemente üblicherweise unmittelbar nebeneinander in einer Richtung parallel zu der Schwenkachse angeordnet, wobei diese beispielsweise mit aufsteigender Größe nebeneinander angeordnet sein können. Die aufsteigende Größe der Schneidelemente korrespondiert dabei mit unterschiedlichen Kabeldurchmessern. Der Größenunterschied zwischen den Schneidelementen ist häufig nicht einfach zu erkennen, so dass ein Nutzer bei einer Vielzahl, beispielsweise zehn, nebeneinander angeordneten Schneidelementen nicht unmittelbar erkennen kann, welches Schneidelement das geeignetste ist bzw. welches Schneidelement er bei einem vorausgehenden Abisoliervorgang verwendet hat.

Ein entsprechendes Abisolierungswerkzeug ist aus der GB 2 217119 A bekannt, bei welchem Hohlkörperteilschalen in Richtung einer Schalenkante Schneidelemente aufweisen, die nebeneinander angeordnet sind. Ein abzuisolierendes Kabel ist von dem Nutzer sogleich in die Schneidkante einzulegen, um einen Isoliererfolg herbeizuführen. Es kann eine Schwierigkeit bedeuten, die für die jeweilige Kabelgröße passende Schneide sogleich zu finden.

Aus der DE 20 2009 000 142 U1 ist ein Abisolierwerkzeug bekannt, das in einer Hohlkörperteilschale jeweils eine Abschäleinheit aufweist, wobei die Hohlkörperteilschale für die Abschäleinheit einen Abschälkanal zum Zugriff auf die Abschäleinheit bildet.

### Zusammenfassung der Erfindung

Ausgehend von dem dargestellten Stand der Technik beschäftigt sich die Erfindung mit der Aufgabenstellung, ein Abisolierwerkzeug anzugeben, das von einem Nutzer vorteilhaft handhabbar ist.

Diese Aufgabe ist beim Gegenstand des Anspruches 1 gelöst, wobei darauf abgestellt ist, dass den Schneidelementen eine Führungskulisse zugeordnet ist, welche mindestens einen seitlich zu einem Schneidelement ausgebildeten Steg zur Ausrichtung eines Kabels an einem Schneidelement aufweist, wobei im Falle von mehreren Stegen diese in Richtung der Schalenkante an gegenüberliegenden Seiten zweier Schneidelemente, insbesondere zweier nebeneinander liegender Schneidelemente, ausgebildet sind.

### (Weiter auf Seite 3, oben, der ursprünglich eingereichten Anmeldungsunterlagen.)

Erfindungsgemäß ist den Schneidelementen eine Führungskulisse zugeordnet, welche einerseits zur Ausrichtung eines Kabels an einem Schneidelement dient, und andererseits der Orientierung eines Nutzers innerhalb der Vielzahl von nebeneinander angeordneten Schneidelementen. Dabei kann in einer besonders einfachen Ausführung vorgesehen sein, dass die Führungskulisse nur einen Steg aufweist, welcher beispielsweise eine Reihe von Schneidelementen in zwei Hälften teilt und somit eine Hilfestellung bei der Erkennung oder Wiedererkennung des geeigneten Schneidelementes bereitstellt.

Sofern an der Schalenkante beispielsweise vier Schneidelemente nebeneinander angeordnet sind, kann der Steg der Führungskulisse mittig zwischen dem zweiten und dritten Schneidelement angeordnet sein, so dass der Nutzer sowohl taktil als auch visuell alle vier Schneidelemente leicht und schnell erkennen kann. Sofern eine größere Anzahl von Schneidelementen entlang der Schalenkante angeordnet ist, empfiehlt es sich, dass die Führungskulisse mehrere Stege aufweist, welche dann in eine Längsrichtung an gegenüberliegenden Seiten zweier Schneidelemente ausgebildet sind, insbesondere an gegenüberliegenden Seiten zweier nebeneinander liegender Schneidelemente.

Zwischen zwei entlang der Schalenkante aufeinander folgenden Stegen der Führungskulisse sind besonders vorteilhaft zwei Schneidelemente angeordnet, wobei sich der Nutzer bei der Auswahl eines geeigneten Schneidelementes an den Stegen orientieren kann. Auf diese Art und Weise können zwischen den aufeinander folgenden Stegen der Führungskulisse jeweils zwei oder auch drei Schneidelemente angeordnet sein, so dass der Nutzer sich zuerst an den Stegen orientiert, beispielsweise einen Abschnitt zwischen einem ersten und einem zweiten Steg auswählt und dann das Kabel beispielsweise bezogen auf den Abschnitt zwischen den beiden Stegen an dem linken Steg anlegt und auf das Schneidelement absenkt. Dieser Handgriff kann anschließend mehrfach von dem Nutzer durchgeführt werden, ohne dass stets erneut ein Abzählen von Schneidelementen oder Ähnliches erforderlich ist.

Vorteilhaft ist es auch, wenn die Schneidelemente mit unterschiedlichen Abständen zueinander angeordnet sind, beispielsweise jeweils paarweise zusammengefasst und relativ zu einem benachbarten Paar beabstandet. Die Anwendung des Abisolierwerkzeugs wird somit besonders komfortabel.

Die Führungskulisse ist dabei vorteilhaft nur an einer der beiden Hohlkörperteilschalen angeordnet, wobei sich die Stege einer ersten Hohlkörperteilschale in Richtung der zweiten Hohlkörperteilschale erstrecken und größenmäßig über die Schneidelemente hervorstehen.

In einem geschlossenen Zustand des Abisolierwerkzeugs können die Stege außen an einer Umfangsfläche der gegenüberliegenden Hohlkörperteilschale anliegen.

Die Führungskulisse unterstützt neben einer Orientierung gleichzeitig auch die Ausrichtung des Kabels relativ zu den Schneidelementen. Im Übrigen ergibt sich eine Zentrierung eines Kabels an einem Schneidelement im Zuge des Zusammenklappens des Abisolierwerkzeugs und damit dem Aufeinandertreffen der beiden Schneidelemente eines Schneidelemente-Paares.

Darüber hinaus kann vorgesehen sein, dass die Führungskulisse zwei an in eine Richtung senkrecht zu der Schalenkante gegenüberliegenden Seiten der Schneidelemente angeordnete Teilführungskulissen aufweist. Die Schneidelemente, welche entlang der Schalenkante des Abisolierwerkzeugs angeordnet sind, sind somit zu beiden Seiten, das heißt sowohl in eine Richtung nach radial außen, als auch in eine Richtung nach radial innen, von jeweils einer Teilführungskulisse der Führungskulisse flankiert, wobei die Teilführungskulissen vorteilhaft parallel zu der Schalenkante angeordnet sind. Die Führungskulisse bildet dabei eine dreidimensionale Führung für ein abzuisolierendes Kabel. Da das Kabel beim Einführen in das Abisolierwerkzeug sowohl vor als auch nach dem betreffenden Schneidelement geführt wird, ist ein Verkanten des Kabels relativ zu dem Schneidelement verhindert. Es kann somit ein optimales Abisolierergebnis erreicht werden.

Zumindest eine Hohlkörperteilschale kann eine in Einsteckrichtung eines Kabels hinter einem Schneidelement ausgebildete Markierung aufweisen, die einem Nutzer ein analoges Abmessen einer abzuisolierenden Einstecklänge ermöglicht. Vorteilhaft weist die Markierung eine Mehrzahl von parallel zu den Schneidelementen angeordnete Linien auf, welchen besonders vorteilhaft auch eine Millimeterangabe, beispielsweise "4", "8", "12", "16" zugeordnet ist. Beim Einführen eines abzuisolierenden Kabels in das Abisolierwerkzeug kann der Nutzer unmittelbar erkennen, wie weit das Kabel in das Abisolierwerkzeug hineinragt.

Selbstverständlich ist es auch möglich, eine entsprechende Markierung auch für eine Abmantelung eines mehradrigen Kabels vorzusehen. Diese Markierung ist dann senkrecht zu der Markierung der Schneidelemente angeordnet, nämlich im Wesentlichen in eine Richtung parallel zu der Schwenkachse des Abisolierwerkzeugs.

Auch kann vorgesehen sein, dass die Markierung dreidimensional körperlich ausgeformt ist. Beispielsweise kann diese Ausformung eine Leiste sein, die sich von der Innenwandung der betreffenden Hohlkörperteilschale abhebt. Dies erleichtert einem Nutzer des Abisolierwerkzeugs das Abmessen einer entsprechenden Länge.

Das Abisolierwerkzeug weist mindestens zwei mit einem Winkel zwischen ungefähr 90° und 170°, insbesondere zwischen 110° und 150°, zueinander angeordnete Hohlkörperteilbereiche auf, wobei zumindest ein erster Hohlkörperteilbereich zwei zueinander schwenkbewegliche Hohlkörperteilschalen aufweist, von welchen zumindest eine Hohlkörperteilschale ohne Verlagerung eines zweiten Hohlkörperteilbereiches verschwenkbar ist.

Gemäß einer vorteilhaften Gestaltung sind ein erster Hohlkörperteilbereich und ein zweiter Hohlkörperteilbereich nun mit einem stumpfen Winkel zwischen 90° und 170° zueinander angeordnet, wodurch sich eine abgewinkelte Form des Abisolierwerkzeuges ergibt. Diese abgewinkelte Form ermöglicht eine ergonomische Anwendung durch den Nutzer, so dass eine mindestens gleich große Zugkraft auf ein Kabel aufgebracht werden kann, ohne gleichzeitig den Unterarm und/oder die Hand des Nutzers stärker zu belasten. Dabei weist zumindest ein erster Hohlkörperteilbereich ein Schneidelement zum Entfernen des Mantels bzw. der Aderisolierung auf, während ein zweiter Teilbereich als Griff zur Führung des Abisolierwerkzeuges dient. Besonders vorteilhaft bilden die beiden Hohlkörperteilbereiche eine pistolenartige Form des Abisolierwerkzeuges aus. Die pistolenartige Form entspricht der natürlichen Haltung eines Handgelenkes während der Aufbringung einer Zugkraft. Es ist somit eine übermäßige Belastung des Handgelenkes verhindert.

Grundsätzlich existieren mindestens zwei unterschiedliche Ausführungsformen des Abisolierwerkzeugs. Gemäß einer ersten denkbaren Ausführungsform weist nur ein erster Hohlkörperteilbereich zwei Hohlkörperteilschalen auf, welche um eine Schwenkachse relativ zueinander verschwenkbar sind, während der zweite Hohlkörperteilbereich ein unbewegliches Griffteil ist und somit keine verschwenkbaren Hohlkörperteilschalen aufweist. Gemäß einer denkbaren zweiten Ausführungsform der Erfindung weisen beide Hohlkörperteilbereiche zueinander verschwenkbare Hohlkörperteilschalen auf, das heißt jeder der Hohlkörperteilbereiche verfügt über eine Schwenkachse. Gemäß dieser zweiten Ausführungsform kann jeder der Hohlkörperteilbereiche sowohl zur Abisolierung als auch als Griffteil verwendet werden.

Es empfiehlt sich insbesondere, dass zwei Hohlkörperteilbereiche jeweils zwei schwenkbewegliche Hohlkörperteilschalen aufweisen, wobei in einer möglichen Ausbildung ein erster Hohlkörperteilbereich zur Aufnahme eines Kabels mit einem ersten Durchmesser ausgebildet ist, und wobei ein zweiter Hohlkörperteilbereich zur Aufnahme eines Kabels mit einem zweiten Durchmesser ausgebildet ist, der sich von dem ersten Durchmesser unterscheidet. Dadurch ist das Abisolierwerkzeug mindestens zur Abisolierung zweier Kabel unterschiedlicher Durchmesser optimiert. Beispielsweise kann in dem ersten Hohlkörperteilbereich ein Kabel mit einem größeren Durchmesser, wie beispielsweise ein mehradriges Rund- und Feuchtraumkabel (zum Beispiel NYM-Kabel) mit einem Durchmesser von 8 mm bis 13 mm entmantelt werden, während in dem zweiten Hohlkörperteilbereich ein Koaxkabel und/oder Datenkabel mit einem Durchmesser von 4,5 mm bis 10 mm abgemantelt werden kann. Darüber hinaus ist es alternativ oder zusätzlich auch möglich, einen der Hohlkörperteilbereiche besonders für ein Flach- oder Rundkabel oder Kabel mit verschiedenen Mantelstärken zu optimieren.

Des Weiteren wird vorgeschlagen, dass das Abisolierwerkzeug mindestens zwei Schwenkachsen aufweist, welche einerseits an einer gemeinsamen ersten Hohlkörperteilschale angeordnet sind und andererseits an voneinander getrennten zweiten Hohlkörperteilschalen. Das Abisolierwerkzeug weist somit eine abgewinkelte erste Hohlkörperteilschale auf, welche zwei oder mehr Schwenkachsen trägt, die mit einem Winkel zueinander angeordnet sind, der dem Winkel zwischen den Hohlkörperteilbereichen entspricht. An jeder dieser Schwenkachsen ist eine separate zweite Hohlkörperteilschale angeordnet, welche unabhängig von einer Bewegung der anderen zweiten Hohlkörperteilschalen separat verschwenkbar ist. Somit muss beim Einlegen eines Kabels in den Hohlkörper nicht der gesamte Hohlkörper geöffnet werden, sondern nur einer der Hohlkörperteilbereiche, welcher durch die erste Hohlkörperteilschale und nur eine der separaten zweiten Hohlkörperteilschalen gebildet ist. Die weiteren Hohlkörperteilbereiche bleiben verschlossen, so dass diese beispielsweise als Griffteil gehalten werden können und nicht zur Einbringung des Kabels in das Abisolierwerkzeug losgelassen werden müssen. Dies erleichtert die Verwendung des Abisolierwerkzeugs und dient zur Zeitersparnis bei der Anwendung.

Die an getrennten zweiten Hohlkörperteilschalen angeordneten ersten und zweiten Schwenkachsen können entweder an der gleichen Schalenkante des Hohlkörpers bzw. der ersten Hohlkörperteilschale angeordnet sein, an gegenüberliegenden Schalenkanten oder auch versetzt um einen Winkelbereich zwischen 0° bzw. 180° (in Umfangsrichtung). Bei einer in Umfangsrichtung um 180° versetzten, d. h. gegenüberliegenden, Anordnung wird vorteilhaft erreicht, dass der Hohlkörper bei jedem Angriff des Nutzers an einem der Hohlkörperteilbereiche das Kabel beispielsweise stets von der linken Seite zwischen die Hohlkörperteilschalen führen muss. In anderen Worten bedeutet dies, dass der Nutzer sowohl beim Ergreifen des ersten Hohlkörperteilbereiches als auch beim Ergreifen des zweiten Hohlkörperteilbereiches gemäß einer pistolenartigen Form des Abisolierwerkzeugs (mit beispielsweise der rechten Hand) stets von links auf das Abisolierwerkzeug schaut.

Die Hohlkörperteilschalen eines Hohlkörperbereiches des Abisolierwerkzeuges können, wie auch bevorzugt, in einer Geschlossenstellung verriegelbar sein. Dies kann für beide zweite Hohlkörperteilschalen gelten, alternativ, wie auch bevorzugt, nur für eine der beiden zweiten Hohlkörperteilschalen. Durch die mögliche Verriegelung ist die Handhabung des Abisolierwerkzeuges weiter vereinfacht. Die Verriegelung kann den zur Abisolierung bzw. Abmantelung genutzten Hohlkörperbereich betreffen. Auch kann sich die Verriegelung als günstig erweisen im Bereich des als Handgriff nutzbaren Hohlkörperabschnittes.

Bevorzugt ist das Abisolierwerkzeug sowohl in einer verriegelten als auch in einer entriegelten Stellung nutzbar.

Die Hohlkörperteilschalen können mittels eines sich in Längsrichtung der Hohlkörperteilschale erstreckenden Achskörpers verschwenkbar sein. Hierbei kann es sich um einen gegenüber den miteinander wirkenden Hohlkörperteilschalen gesonderten Achskörper handeln, bspw. eine gesteckte Metallachse. Bevorzugt sind beide zweiten Hohlkörperteilschalen über einen solchen Achskörper an der ersten, abgewinkelt verlaufenden Hohlkörperteilschale schwenkbar angebunden.

In einer möglichen Ausgestaltung kann der Achskörper ein Verriegelungsteil durchsetzen. Ein solches Verriegelungsteil kann der gesicherten Festsetzung einer zweiten Hohlkörperteilschale dienen. Der das Verriegelungsteil durchsetzende Achskörper kann darüber hinaus der bevorzugt unverlierbaren Fesselung des Verriegelungsteiles an einer der Hohlkörperteilschalen dienen, ebenso wie einer möglichen Führung des Verriegelungsteiles bei einer Verlagerung desselben aus einer Verriegelungsstellung in eine Entriegelungsstellung und umgekehrt.

Zudem kann, wie auch bevorzugt, das Verriegelungsteil quer zur Längsrichtung des Achskörpers in eine Ver- und Entriegelungsstellung bewegbar sein. Auch hierbei ergibt sich eine günstige Handhabung, bspw. eine daumenbetätigbare Handhabung des Verriegelungsteiles, um dieses aus der einen in die andere Endstellung zu verlagern. Es kann sich, zumindest annähernd, eine - bezogen auf eine der Hohlkörperteilschalen - im Querschnitt tangentiale Verlagerungsrichtung des Verriegelungsteiles ergeben.

In bevorzugter Ausgestaltung ist zumindest die Verriegelungsstellung verrastet. In weiterer, wie auch bevorzugter Ausgestaltung ergibt sich eine solche Verrastung sowohl in der Verriegelungsstellung als auch in der Entriegelungsstellung, welche Verrastung darüber hinaus jeweils an derselben Hohlkörperteilschale erfolgen kann. In einer möglichen Ausgestaltung ist dies die erste Hohlkörperteilschale. Bevorzugt handelt es sich bei der Verrastung um eine solche, die allein durch Einleitung einer auf das Verriegelungsteil einwirkenden Schiebekraft durch den Benutzer aufhebbar ist, weiter bspw. zufolge Überlaufen eines vorgesehenen Rastvorsprunges.

Es wird des Weiteren vorgeschlagen, dass ein erster Hohlkörperteilbereich über eine Umfangsfläche hinausragende Angrifflaschen zum Zusammenpressen der den Hohlkörper bildenden Hohlkörperteilschalen mittels eines Daumens und eines Zeigefingers einer Hand aufweist, und wobei ein zweiter Hohlkörperteilbereich eine Grifffläche zur gleichzeitigen Anlage eines Handballens der Hand aufweist. Gemäß dieser Ausgestaltung werden die Angrifflaschen des ersten Hohlkörperteilbereiches während einer Abmantelung eines Kabels erfasst und zusammengedrückt, während der zweite Hohlkörperteilbereich durch im Wesentlichen den Handballen geführt wird. Es kann vorgesehen sein, dass sowohl der erste Hohlkörperteilbereich als auch der zweite Hohlkörperteilbereich Angrifflaschen aufweisen, so dass beide Hohlkörperteilbereiche gleichermaßen zur Abisolierung verwendet werden können. Es empfiehlt sich, dass die beiden Angrifflaschen senkrecht zu der von den beiden Hohlkörperteilbereichen aufgespannten Ebene angeordnet sind. Dies entspricht einer natürlichen Haltung der Hand eines Nutzers während der Abmantelung eines Kabels.

Der von den beiden Hohlkörperteilschalen gebildete Hohlkörper kann zumindest in Bezug auf einen Endbereich in seiner Außenkontur einen Konus aufweisen, welcher sich in Richtung einer Grifffläche des Abisolierwerkzeugs aufweitet. Das Abisolierwerkzeug weist somit an einem oder beiden Endbereichen eine konische Außenkontur auf, welche der besseren Zugänglichkeit des Isolierwerkzeuges in engen Kabelanschlussdosen, Stromkästen oder dergleichen dient. Insbesondere ist dies auch dort von Vorteil, wo mehrere Kabel eng nebeneinander liegen. Zur Abmantelung eines von mehreren eng nebeneinander liegenden Kabeln wird das abzumantelnde Kabel von den weiteren Kabeln abgespreizt, wodurch ein Winkel zwischen den Kabeln entsteht. In diesen Winkelbereich wird der konische Endbereich des Abisolierwerkzeugs so tief wie möglich hineingeschoben, bis die konische Umfangsfläche maximal an den Scheitelpunkt herangeschoben ist. Das innerhalb des Hohlkörpers angeordnete Schneidelement kann dabei vorteilhaft innerhalb des konischen Endbereiches angeordnet sein.

Es wird des Weiteren vorgeschlagen, dass eine Umfangsfläche des Konus einen Winkel von ungefähr 30° bis 60° zu einer Stirnfläche des Endbereiches aufweist. Dies entspricht einer üblichen Abspreizung eines abzuisolierenden Kabels von mehreren nebeneinander liegenden Kabeln. Das Abisolierwerkzeug kann somit optimal eingesetzt werden.

Des Weiteren wird vorgeschlagen, dass der Konus ausgehend von einer Stirnfläche des Endbereiches über eine Länge von 5 mm bis 20 mm ausgebildet ist. Dadurch steht eine ausreichend große Außenfläche des Abisolierwerkzeuges zur Abspreizung eines Kabels zur Verfügung, während - im Sinne eines handlichen Werkzeugs - gleichzeitig ein möglichst geringer Durchmesser des Abisolierwerkzeugs beibehalten wird.

Der Hohlkörper an einer Schalenkante, an welcher die Hohlkörperteilschalen aufeinander zu schwenkbar sind, eine Einbuchtung zum Eindrücken eines Kabels in den Hohlkörper aufweisen, welche Einbuchtung insbesondere einen Öffnungswinkel < 180° aufweist. Durch diese Ausgestaltung ist es möglich, das Abisolierwerkzeug mit einem Kabel aufzudrücken, so dass es nicht erforderlich ist, eine Hand zum Verschwenken einer Hohlkörperteilschale zu benutzen. Ein in den Hohlkörper einzubringendes Kabel wird gegen die schrägen Flächen der Einbuchtung gedrückt, wodurch sich die beiden Hohlkörperteilschalen voneinander trennen lassen, so dass das Kabel eingelegt werden kann. Es empfiehlt sich dabei, dass die Einbuchtung einen Öffnungswinkel kleiner als 180° aufweist, damit die Einbuchtung keine ebene Fläche bildet, sondern vielmehr die Randbereiche der Einbuchtung (ähnlich einem Überhang) über das darin eingelegte Kabel greifen. Damit ist eine Angriffsfläche geschaffen, an welcher das Kabel angreifen und das Abisolierwerkzeug öffnen kann. Der Nutzer kann das Abisolierwerkzeug somit wie üblich an einer Grifffläche eines beispielsweise zweiten Hohlkörperteilbereiches in einer ersten Hand halten und mit einer zweiten Hand ein Kabel gegen die an einem ersten Hohlkörperteilbereich ausgebildete Einbuchtung drücken. Vorteilhaft befindet sich die Einbuchtung zudem in der Nähe eines Endbereiches des Abisolierwerkzeuges, insbesondere eines Endbereichs, der eine Öffnung zum Hindurchgreifen eines Kabels aufweist. Dadurch ist es möglich, die Einbuchtung vorteilhaft in einen Bereich zu legen, welcher aus im Wesentlichen unterschiedlichen Richtungen zugänglich ist. Besonders vorteilhaft befindet sich die Einbuchtung in einem Bereich, dessen Außenkontur einen Konus aufweist, der sich in Richtung einer Grifffläche des Abisolierwerkzeugs aufweitet. Das Abisolierwerkzeug ist somit besonders einfach mittels des Druckes eines Kabels gegen die Einbuchtung öffenbar. Alternativ kann die Einbuchtung auch an vorstehenden Angrifflaschen ausgebildet sein.

Des Weiteren wird vorgeschlagen, dass der Öffnungswinkel der Einbuchtung einer Öffnungsbreite von 1 mm bis 20 mm entspricht, insbesondere einem Durchmesser eines in den Hohlkörper aufzunehmenden Kabels entspricht. Die Einbuchtung ist somit groß genug, damit auch ein mehradriges Kabel, wie bspw. ein NYM-Kabel, an einer Kante der Einbuchtung angreifen kann, um das Abisolierwerkzeug zu öffnen. Besonders empfiehlt es sich, dass der Umfangsabschnitt der Einbuchtung ungefähr einem Durchmesser des in den Hohlkörper einzubringenden Kabels entspricht, so dass ein Abrutschen des Kabels von dem Abisolierwerkzeug zuverlässig verhindert ist. Besonders vorteilhaft weist die Einbuchtung einen Öffnungswinkel von 150° oder weniger auf.

Es empfiehlt sich, dass der Schwenkachse eine Feder zugeordnet ist, mittels deren Rückstellkraft die Hohlkörperteilschalen zur Bildung eines Hohlkörpers aufeinander zu schwenkbar sind oder zur Öffnung des Hohlkörpers voneinander wegschwenkbar sind. Gemäß der erst genannten Alternative ist es zum Öffnen des Abisolierwerkzeugs, das heißt zum Einlegen eines Kabels zwischen die Hohlkörperteilschalen, erforderlich, zumindest eine Hohlkörperteilschale gegen die Rückstellkraft der Feder zu verschwenken. Die Rückstellkraft der Feder sollte dabei so bemessen sein, dass es ohne weiteres möglich ist, die Hohlkörperteilschale mittels eines an der Einbuchtung angreifenden Kabels zu öffnen. Sobald eine der Hohlkörperteilschalen verschwenkt ist und das Kabel zwischen die beiden Hohlkörperteilschalen gelangt, verschwenkt die Rückstellkraft die Hohlkörperteilschale zurück in die Schließstellung. Dabei wird das Kabel bereits ohne weiteres Zutun des Nutzers sicher zwischen den Hohlkörperteilschalen gehalten. Der Nutzer muss zum Abisolieren bzw. Abmanteln anschließend nur noch die beiden Hohlkörperteilschalen, vorteilhaft an dem entsprechenden Hohlkörperteilbereich ausgebildeten Angrifflaschen, zusammendrücken. Gemäß der zweitgenannten Alternative sind die Hohlkörperteilschalen mittels der Rückstellkraft der Feder zum Öffnen des Hohlkörpers voneinander wegschwenkbar, das heißt die Rückstellkraft arbeitet in Richtung der aufgeschwenkten Stellung des Hohlkörpers. Dabei ist es zum Aufeinanderpressen der Hohlkörperteilschalen erforderlich, dass der Nutzer die Rückstellkraft der Feder überwindet. Sobald er seinen Griff von den Hohlkörperteilschalen löst, öffnet sich der Hohlkörper durch die Rückstellkraft der Feder selbsttätig, so dass der Nutzer das Kabel ohne eine manuelle Verschwenkung einer der Hohlkörperteilschalen aus dem Werkzeug entfernen kann. In diesem Zusammenhang kann es beispielsweise auch vorgesehen sein, dass ein Abisolierwerkzeug einen ersten Hohlkörperteilbereich mit einer Feder aufweist, deren Rückstellkraft in eine Schließrichtung des Hohlkörpers gerichtet ist, wobei ein zweiter Hohlkörperteilbereich eine Feder aufweist, deren Rückstellkraft in Öffnungsrichtung des Hohlkörpers gerichtet ist.

Gemäß dieser Ausgestaltung ist das Abisolierwerkzeug vorteilhaft ausgestaltet, um sowohl einen Außenmantel von einem mehradrigen Kabel zu entfernen, als auch eine Aderisolierung eines einadrigen Kabels. Während ein Entfernen eines Außenmantels vorteilhaft beispielsweise über eine Stirnseite des Abisolierwerkzeugs erfolgt, kann ein Entfernen einer Aderisolierung beispielsweise in einer dazu senkrechten Richtung erfolgen, das heißt an einer Schalenkante des Hohlkörpers.

Gemäß einer denkbaren Ausführungsform sind die Schneidelemente an der der Schenkachse im Wesentlichen gegenüberliegenden Schalenkante angeordnet, an welcher die Hohlkörperteilschalen verbindbar sind. Jede Hohlkörperteilschale trägt dabei ein Schneidelement, welches mit einem Schneidelement der gegenüberliegenden Hohlkörperteilschale korrespondiert. In einem geöffneten Zustand des Abisolierwerkzeugs sind die beiden Hohlkörperteilschalen voneinander weg geschwenkt, so dass die gegenüberliegenden Schneidelemente voneinander getrennt sind und ein Kabel zwischen ein Schneidelemente-Paar gelegt werden kann.

Ein erster Hohlkörperteilbereich kann eine über eine Umfangsfläche hinausragende Funktionslasche aufweisen kann, wobei die Funktionslasche ein Schneidelement mit einer sich in Richtung der Schwenkachse erstreckenden Schneide aufweisen kann.

Die zumindest eine Funktionslasche kann, wie auch bevorzugt, derart über die Umfangsfläche der Hohlkörperteilschale, an welcher die Funktionslasche bevorzugt einstückig und materialeinheitlich angeformt ist, vorragen, dass sich zumindest annähernd eine mit Bezug auf eine den betreffenden Hohlkörperteilbereich in Längserstreckung durchsetzende Mittenachse radiale Ausrichtung der Funktionslasche in einem entsprechenden Querschnitt sich einstellt. In bevorzugter Ausgestaltung bietet die Funktionslasche ein Schneidelement an, bspw. zum Einschneiden einer Kabelummantelung entlang dessen Längserstreckung.

Die Nutzung einer in einer Funktionslasche angeordneten Schneide erfolgt entsprechend bevorzugt außerhalb des durch die Hohlkörperteilschalen umfassten Bereiches, weiter entsprechend in einem hierzu peripheren Bereich.

Bevorzugt sind zwei Funktionslaschen vorgesehen, jeweils zugeordnet den miteinander wirkenden Hohlkörperteilschalen. Es können weiter die Funktionslaschen zumindest im Bereich der Schneide bei geschossenen Hohlkörperteilschalen in Überdeckung zueinander sein. Hierbei können beide Funktionslaschen eine in Richtung auf die andere Funktionslasche weisende Schneide besitzen, alternativ nur eine der beiden Funktionslaschen, wobei insbesondere in diesem Fall die schneidenlose Funktionslasche einen Abstützungsbereich für das mantelseitig einzuschneidende Kabel anbieten kann.

Die zumindest im Bereich der Schneide in Überdeckung bringbaren Funktionslaschen belassen in der Nutzungsstellung, welche der Schalen-Schließstellung bevorzugt entspricht, eine Durchsatzöffnung, mit einem Durchmesser, der an übliche Durchmesser zu bearbeitender Elektrokabel entspricht. Die Durchsatzöffnung ist im Querschnitt bevorzugt kreisrund, ggf. elliptisch, gebildet. Die Schneide taucht nach radial innen in die im Querschnitt belassene Öffnungs-Querschnittsfläche ein, zum entsprechenden schneidenden Eingriff in die Ummantelung des durchgeführten Kabels.

In bevorzugt axialer Verlängerung der Durchsatzöffnung kann an dem Gehäuse eine Führung für das auch durch die Durchsatzöffnung geführte Kabel ausgebildet sein, bspw. in Form einer Anlagenut.

Als besonders bedienungsgünstig erweist sich eine Ausgestaltung, bei welcher die Funktionslaschen als Angriffslaschen, insbesondere solche, wie diese bereits beschrieben sind, ausgebildet sind. Entsprechend kann über die Angriffslaschen im Zuge des Abmantelungsvorganges Druck in Richtung auf eine Schließstellung erreicht werden, entsprechend weiter Druck auf die in die Ummantelung eintauchende Schneide.

### Kurze Beschreibung der Zeichnungen

Im Folgenden wird die Erfindung anhand von Ausführungsbeispielen näher erläutert. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Es zeigen:
- Fig. 1: ein Abisolierwerkzeug in einer perspektivischen Ansicht, eine erste Ausführungsform betreffend;
- Fig. 2: das Abisolierwerkzeug in einer Seitenansicht;
- Fig. 3: das Abisolierwerkzeug in geschlossenem Zustand in einer Draufsicht;
- Fig. 4: das Abisolierwerkzeug in einem geöffneten Zustand in einer Draufsicht;
- Fig. 5: das Abisolierwerkzeug mit zwei eingeführten Kabeln;
- Fig. 6: das Abisolierwerkzeug in einer perspektivischen Seitenansicht;
- Fig. 7: das Abisolierwerkzeug in einer perspektivischen Ansicht (Rückseite zu Fig. 1);
- Fig. 8: das Abisolierwerkzeug gemäß Fig. 7 nach der Einführung eines Kabels;
- Fig. 9: einen Querschnitt durch eine Einbuchtung des Abisolierwerkzeugs;
- Fig. 10: das Abisolierwerkzeug in einer Seitenansicht, eine zweite Ausführungsform betreffend;
- Fig. 11: die Herausvergrößerung des Bereiches 11 in Figur 10;
- Fig. 12: den Schnitt gemäß der Linie XII-XII in Figur 10;
- Fig. 13: die Herausvergrößerung des Bereiches XIII in Figur 12, betreffend ein Verriegelungsteil in der Entriegelungsstellung;
- Fig. 14: eine der Figur 13 entsprechende Ausgestaltung, jedoch die Verriegelungsstellung betreffend;
- Fig. 15: das Abisolierwerkzeug der zweiten Ausführungsform in einer perspektivischen Seitenansicht gemäß Figur 6;
- Fig. 16: eine der Figur 15 entsprechende perspektivische Darstellung, jedoch betreffend eine Aufschwenkstellung einer mit einer Funktionslasche versehenen zweiten Hohlkörperteilschale;
- Fig. 17: die Herausvergrößerung des Bereiches XVII in Figur 15;
- Fig. 18: die Herausvergrößerung des Bereiches XVIII in Figur 17.

### Beschreibung der Ausführungsformen

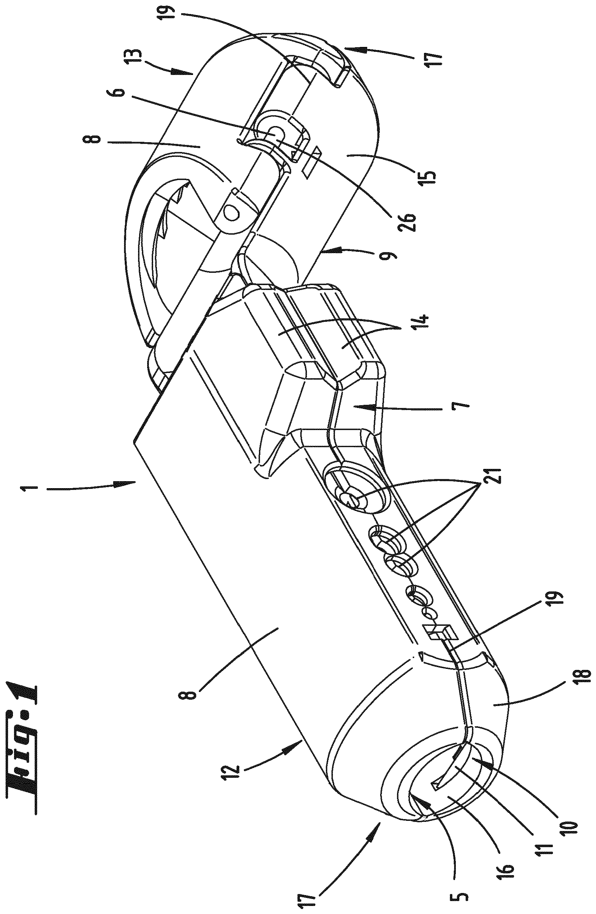

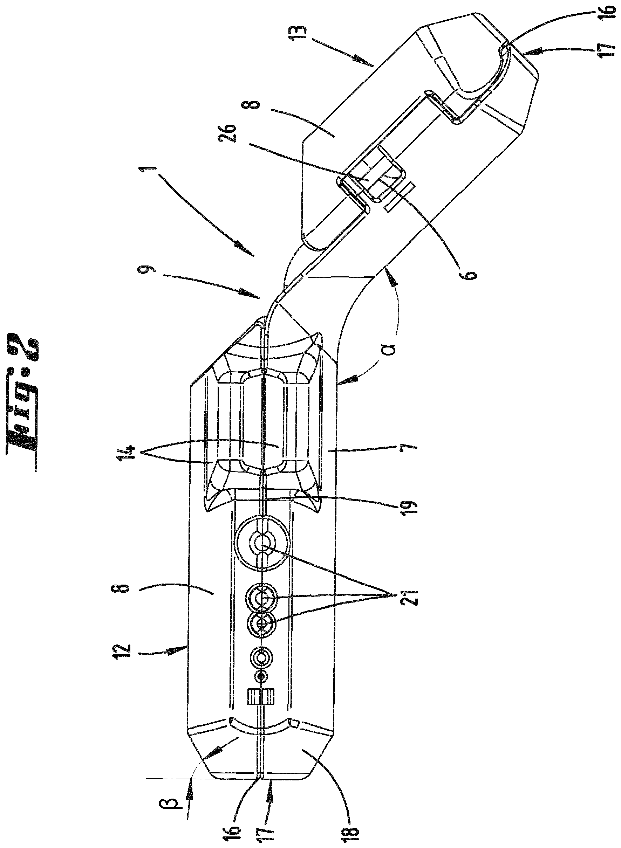

Die Figuren 1 bis 6 zeigen eine erste Seite eines beispielhaften Abisolierwerkzeugs 1 zum Entfernen eines Außenmantels 2 und/oder einer Aderisolierung 3 eines elektrischen ein- oder mehradrigen Kabels 4. Das Abisolierwerkzeug 1 weist zwei einen Hohlkörper 9 bildende Hohlkörperteilbereiche 12, 13 auf, welche um einen Winkel α (siehe Figur 2) zueinander angeordnet sind. Der Winkel α beträgt hier ungefähr 135°. Die beiden Hohlkörperteilbereiche 12, 13 weisen eine gemeinsame erste Hohlkörperteilschale 7 auf, an welcher zwei Schwenkachsen 5, 6 angeordnet sind. Eine erste Schwenkachse 5 ist dabei dem ersten Hohlkörperteilbereich 12 zugeordnet, während eine zweite Schwenkachse 6 dem zweiten Hohlkörperteilbereich 13 zugeordnet ist. An den Schwenkachsen 5, 6 ist jeweils eine zweite Hohlkörperteilschale 8 angeordnet, welche um die jeweilige Schwenkachse 5, 6 relativ zu der ersten Hohlkörperteilschale 7 verschwenkbar ist. Die Schwenkachsen 5, 6 sind an gegenüberliegenden Schalenkanten 19 der ersten Hohlkörperteilschale 7 angeordnet.

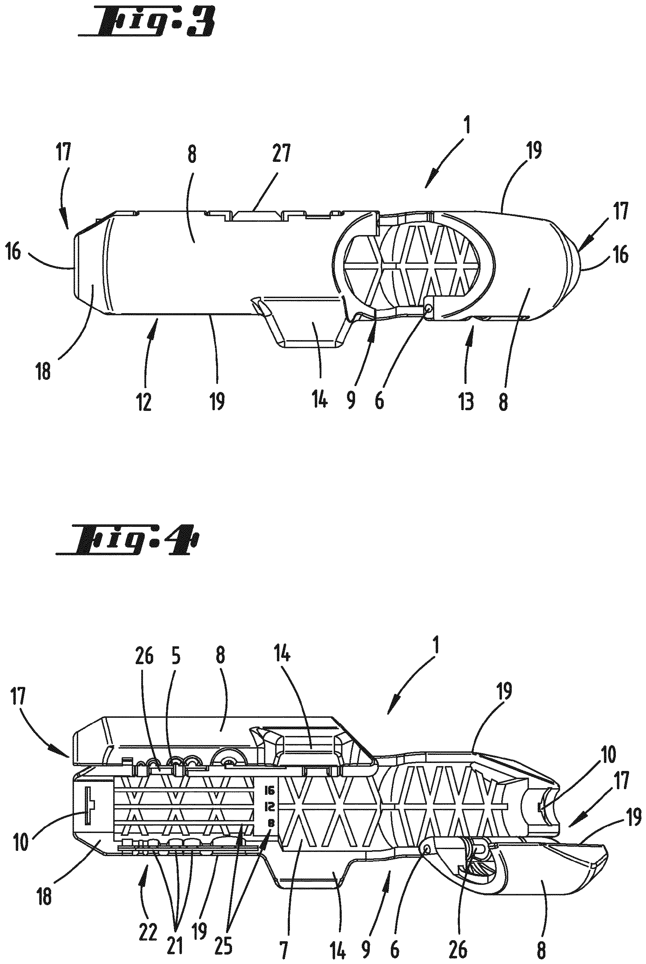

In dem Hohlkörper 9 ist sowohl an dem ersten Hohlkörperteilbereich 12 als auch an dem zweiten Hohlkörperteilbereich 13 jeweils ein Schneidelement 10 (siehe Figur 4), insbesondere ein Schneidelement-Paar, angeordnet, dessen Schneidkante 11 senkrecht zu den Schwenkachsen 5, 6 verläuft. Dieses Schneidelement 10 dient insbesondere zum Entfernen eines Außenmantels 2 eines mehradrigen Kabels 4. Im Bereich dieses Schneidelements 10 weist der Hohlkörper 9 eine Öffnung 16 auf, durch welche ein abzuisolierendes Kabel 4 geführt werden kann.

Der die Öffnung 16 tragende Endbereich 17 des Hohlkörperteilbereiches 12 weist darüber hinaus in seiner Außenkontur einen Konus 18 auf, der sich in eine Richtung von der Öffnung 16 weg aufweitet. Der Konus 18 weist hier einen Winkel β von ungefähr 45° relativ zu der Ebene der Öffnung 16 auf (siehe Figur 2).

Insgesamt bilden der erste Hohlkörperteilbereich 12 und der zweite Hohlkörperteilbereich 13 des Abisolierwerkzeugs 1 eine pistolenartige Form, so dass ein Nutzer des Abisolierwerkzeugs 1 eine Grifffläche 15 der Hohlkörperteilbereiche 12, 13 als Griffteil verwendet und den anderen Hohlkörperteilbereich 13, 12 als eigentliches Werkzeug zur Abisolierung eines Kabels 4.

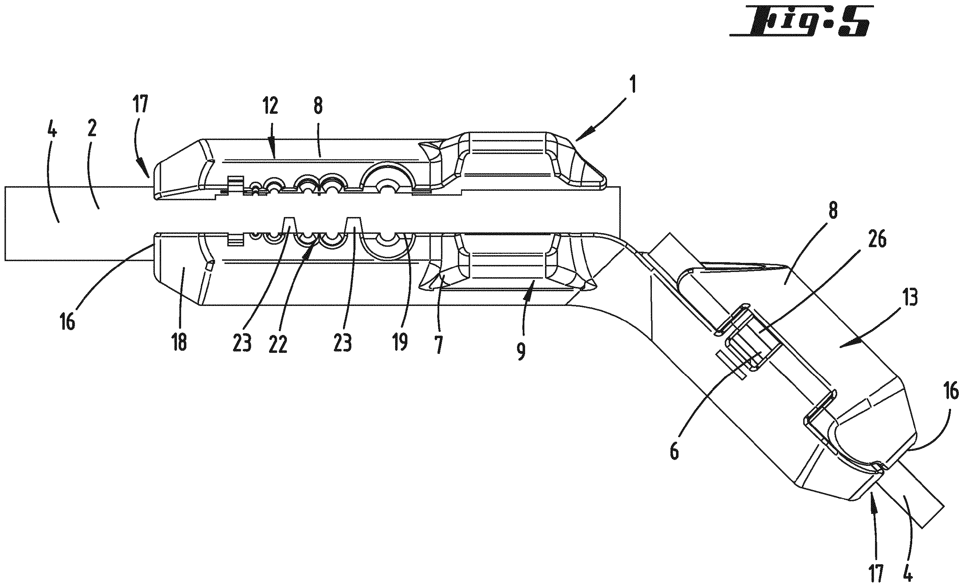

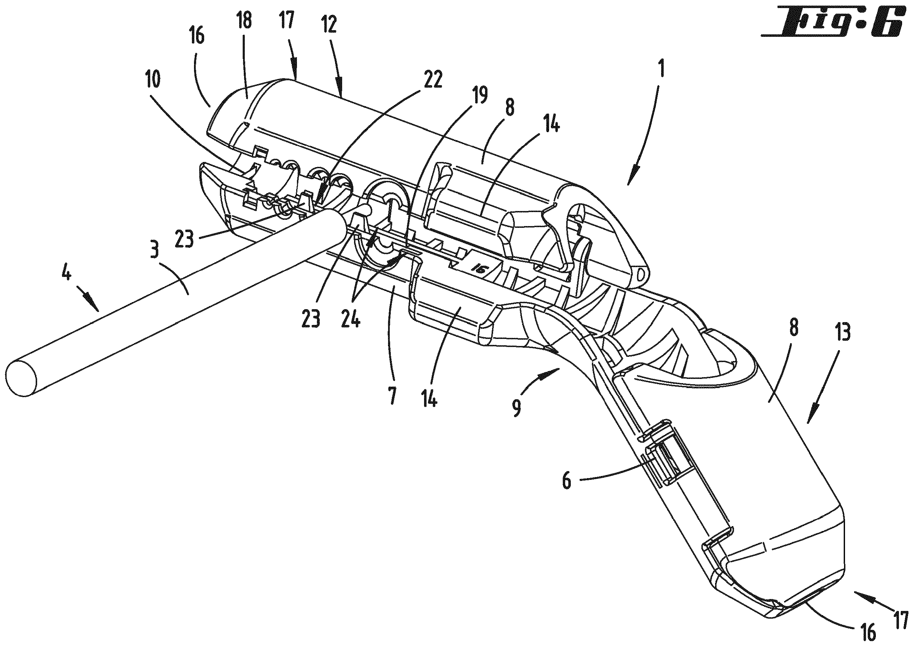

Das Abisolierwerkzeug 1 weist an einer Schalenkante 19 eine Mehrzahl von Schneidelementen 21, insbesondere Schneidelement-Paare, hier sechs Schneidelemente 21, auf. Diese sind so angeordnet, dass korrespondierende Schneidelemente 21 eines Paares an der ersten Hohlkörperteilschale 7 und der zweiten Hohlkörperteilschale 8 angeordnet sind. In Richtung der an der Schalenkante 19 nebeneinander angeordneten Schneidelemente 21 ist eine Führungskulisse 22 ausgebildet, welche mehrere Stege 23 zur Führung eines Kabels 4 in den Hohlkörper 9 aufweist (siehe Figuren 5 und 6). Die Stege 23 sind auf zwei Teilführungskulissen 24 der Führungskulisse 22 aufgeteilt, wobei sich die Teilführungskulissen 24 parallel zu und auf gegenüberliegenden Seiten der die Schneidelemente 21 aufweisenden Schalenkante 19 erstrecken.

Figur 4 zeigt das Abisolierwerkzeug 1 in einem geöffneten Zustand, wobei die beiden zweiten Hohlkörperteilschalen 8 um die Schwenkachsen 5, 6 verschwenkt sind. Zu erkennen ist dabei eine an der ersten Hohlkörperteilschale 7 ausgebildete Markierung 25, welche einen Abstand von einem Schneidelement 21 zu einer Linie der Markierung 25 angibt. Dadurch kann eine von einem Kabel 4 abzuisolierende Länge abgemessen werden. Den einzelnen Linien der Markierung 25 sind Millimeterangaben, hier "8", "12", "16" zugeordnet.

Schließlich sind an den Hohlkörperteilschalen 7, 8 Angrifflaschen 14 ausgebildet, welche dem Zusammendrücken der beiden Hohlkörperteilschalen 7, 8 während des Abmantelungsprozesses dienen. Die Angrifflaschen 14 erstrecken sich ausgehend von der Umfangsfläche des Hohlkörpers 9 in eine Richtung, welche senkrecht zu einer von den Hohlkörperteilbereichen 12, 13 aufgespannten Ebene angeordnet ist.

Figur 5 zeigt das Abisolierwerkzeug 1 mit zwei in den Hohlkörper 9 eingeführten Kabeln 4. Die Kabel 4 weisen voneinander verschiedene Durchmesser auf, wobei das in den ersten Hohlkörperteilbereich 12 eingeführte Kabel 4 einen größeren Durchmesser aufweist als das in den zweiten Hohlkörperteilbereich 13 eingeführte Kabel 4. Üblicherweise befindet sich während des Vorgangs des Abisolierens jedoch nur ein Kabel in entweder dem ersten Hohlkörperteilbereich 12 oder dem zweiten Hohlkörperteilbereich 13. Der jeweilige Hohlkörperteilbereich 12, 13 ist für bestimmte Durchmesser eines Kabels 4 optimiert. Beispielsweise kann der erste Hohlkörperteilbereich 12 für Rund- und Feuchtraumkabel mit einem Durchmesser von 8 mm bis 13 mm ausgelegt sein, während der zweite Hohlkörperteilbereich 13 für Datenkabel mit einem Durchmesser von 4 mm bis 8 mm optimiert ist. Je nach dem jeweiligen Durchmesser kann das Schneidelement 10, die Öffnung 16 oder auch der Innendurchmesser der Hohlkörperteilbereiche 12, 13 ausgebildet sein.

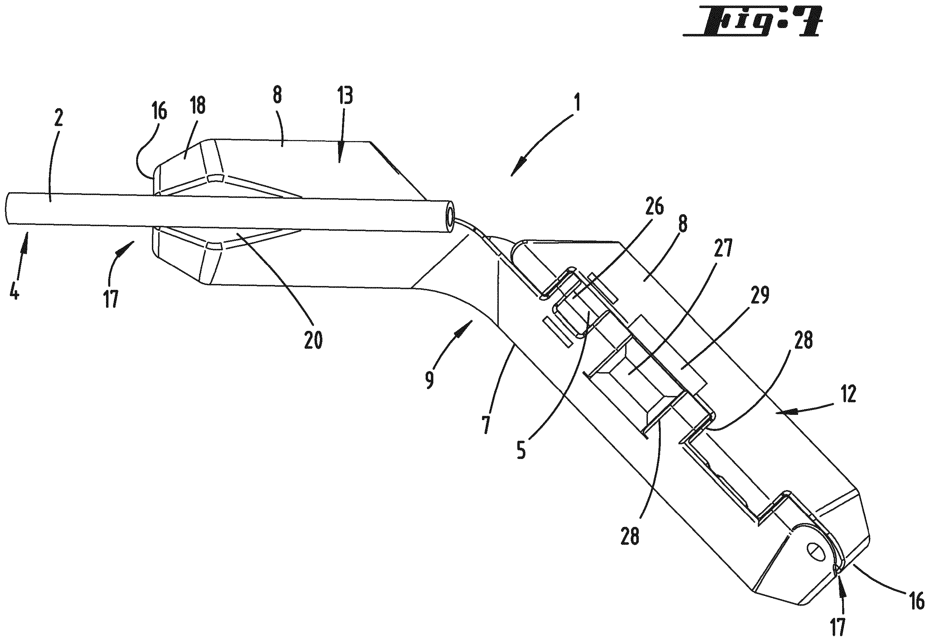

Die Figuren 7 bis 9 zeigen eine Rückseite des (in den Figuren 1 - 6 gezeigten) Abisolierwerkzeugs 1, welche an der Umfangsfläche des zweiten Hohlkörperteilbereiches 13 eine Einbuchtung 20 aufweist, die einen Umfangsteilbereich ausspart. Die Einbuchtung 20 schneidet hier ungefähr einen Winkelteilbereich von 130° aus dem Umfang des Hohlkörperteilbereichs 13 heraus. In diese Einbuchtung 20 kann ein in den Hohlkörper 9 einzulegendes Kabel 4 eingebracht werden und quer gegen die Schalenkante 19 gepresst werden, bis sich die Hohlkörperteilschalen 7, 8 voneinander weg schwenken. Hierbei ist die Rückstellkraft einer Feder (nicht dargestellt) zu überwinden, welche an der Schwenkachse 6 angeordnet ist und den Hohlkörper 9 zu verschließen sucht.

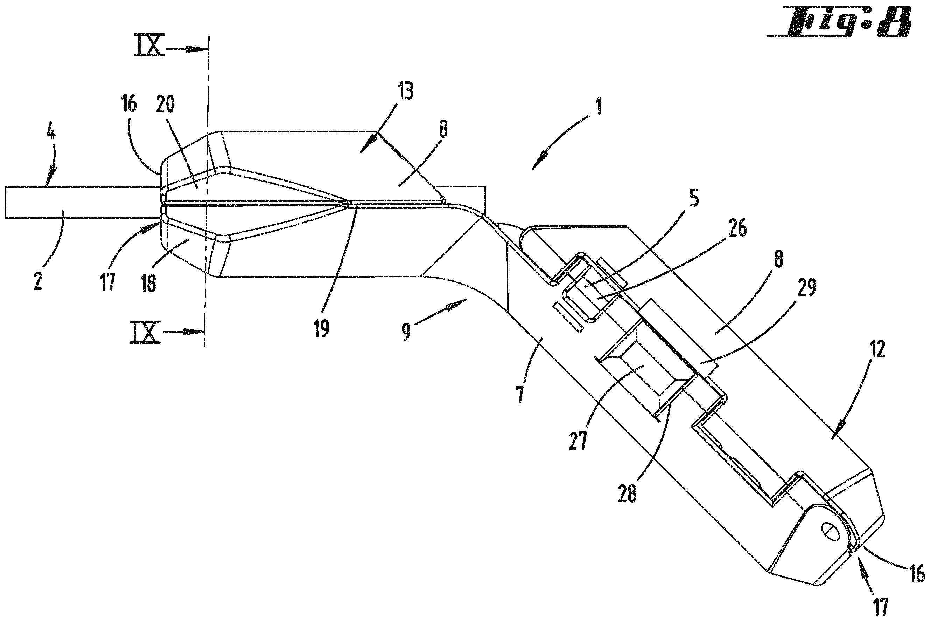

Figur 7 zeigt den Zustand, in welchem ein Kabel 4 in der Einbuchtung 20 liegt und gegen die Hohlkörperteilschalen 7, 8 drückt. Dabei stützt sich das Kabel 4 gegen die schrägen Flanken der Einbuchtung 20. In der Figur 8 ist das Kabel 4 bereits zwischen die beiden Hohlkörperteilschalen 7, 8 geführt. Die Feder schließt den Hohlkörper 9 aufgrund ihrer Rückstellkraft unmittelbar nach dem Überwinden der geöffneten Schalenkante 19 durch das Kabel 4.

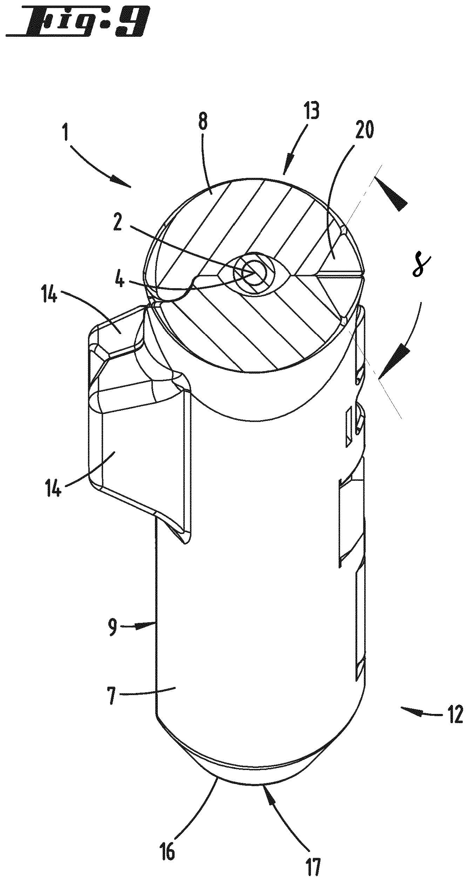

Figur 9 zeigt schließlich einen Querschnitt durch den zweiten Hohlkörperteilbereich 13 im Bereich der Einbuchtung 20. Erkennbar ist hier aus dem ansonsten kreisrunden Umfang des Hohlkörperteilbereichs 13 die Einbuchtung 20 mit einem Öffnungswinkel γ von ungefähr 130° ausgespart.

Die Erfindung funktioniert nun beispielsweise so, dass ein Nutzer zur Abmantelung eines Außenmantels 2 von einem Kabel 4 einen Hohlkörperteilbereich 12, 13 des Abisolierwerkzeugs 1 auswählt, welcher dem Durchmesser des Kabels 4 am besten entspricht. Falls es sich beispielsweise um ein Kabel 4 mit einem Durchmesser von beispielsweise 6 mm handelt, eignet sich hier insbesondere der zweite Hohlkörperteilbereich 13. Der Nutzer ergreift das Abisolierwerkzeug 1 daher an dem ersten Hohlkörperteilbereich 12, welcher ähnlich einer Pistolenform mit dem zweiten Hohlkörperteilbereich 13 verbunden ist. Die Grifffläche 15 des ersten Hohlkörperteilbereiches 12 dient dabei zur Anlage der Hand des Nutzers, insbesondere des Handballens sowie des Ring- und Mittelfingers. Mit der anderen Hand ergreift der Nutzer das abzuisolierende Kabel 4 und drückt dieses innerhalb der Einbuchtung 20 gegen die Hohlkörperteilschalen 7, 8 des zweiten Hohlkörperteilbereiches 13 (siehe Figuren 7 und 9). Sofern der Nutzer eine Kraft aufwändet, welche größer ist als die Rückstellkraft der Feder, welche der Schwenkachse 6 zugeordnet ist, verschwenkt die zweite Hohlkörperteilschale 8, so dass das Kabel 4 in den Hohlkörper 9 eingeführt werden kann. Gegebenenfalls führt der Nutzer das Abisolierwerkzeug 1 nun noch an dem Außenmantel 2 des Kabels 4 entlang, bis eine gewünschte zur Abmantelung vorgesehene Länge des Kabels 4 erreicht ist. Wird das Abisolierwerkzeug 1 in einer schwerzugänglichen Dose oder einem beengten Stromkasten durchgeführt, kann das Abisolierwerkzeug 1 aufgrund des Konus 18 des Endbereiches 17 möglichst nah an die gewünschte Einsatzstelle herangeführt werden.

Zur Abmantelung umgreift der Nutzer anschließend den zweiten Hohlkörperteilbereich 13 mit dem Daumen und dem Zeigefinger und drückt die Hohlkörperteilschalen 7, 8 aneinander. Dadurch wird das Kabel 4 auf das Schneidelement 10 gedrückt, so dass es bei einer Rotation des Schneidelements 10 um das Kabel 4 zu einem entsprechenden Schnitt kommt, der das Entfernen des Außenmantels 2 erlaubt. Die Rotation des Abisolierwerkzeugs 1 um das Kabel 4 führt der Nutzer in üblicher Art und Weise durch eine Drehbewegung des Handgelenks aus.

In entsprechender Art und Weise kann auch eine Abmantelung eines Kabels 4 in dem ersten Hohlkörperteilbereich 12 durchgeführt werden, wobei dort die Angrifflaschen 14 zum Aneinanderdrücken der Hohlkörperteilschalen 7, 8 genutzt werden können.

Des Weiteren kann der Nutzer das Abisolierwerkzeug 1 noch zur Entfernung einer Aderisolierung 3 eines einadrigen Kabels 4 verwenden. Dazu öffnet der Nutzer den ersten Hohlkörperteilbereich 12 des Abisolierwerkzeugs 1 manuell, indem er die zweite Hohlkörperteilschale 8 des ersten Hohlkörperteilbereiches 12 relativ zu der ersten Hohlkörperteilschale 7 verschwenkt. Dadurch erhält er einen Blick in den Hohlkörper 9 des Abisolierwerkzeugs 1, welcher an der der Schwenkachse 5 gegenüberliegenden Schalenkante 19 eine Mehrzahl von nebeneinander angeordneten Schneidelementen 21 aufweist. Entsprechend dem jeweiligen Durchmesser der Aderisolierung 3 wählt der Nutzer ein dazu korrespondierendes Schneidelement 21 aus, das der Nutzer besonders vorteilhaft durch Orientierung an den unregelmäßig angeordneten Stegen 23 der Führungskulisse 22 erkennt. Insbesondere bei der Abisolierung einer Mehrzahl von Kabeln 4 mit gleichem Durchmesser kann der Nutzer sich den zu dem gewünschten Schneidelement 21 nächst liegenden Steg 23 merken und das Kabel 4 schnell in das Abisolierwerkzeug 1 einlegen. Dabei stützt der Nutzer das Kabel 4 vorteilhaft an dem benachbarten Steg 23 ab, wodurch im Wesentlichen eine Ausrichtung des Kabels 4 relativ zu dem Schneidelement 21 erfolgt. Zusätzlich kann der Nutzer eine gewünschte abzuisolierende Länge des Kabels 4 anhand der Markierung 25 abmessen. Sofern beispielsweise eine Länge von zwölf Millimetern des Kabels 4 abisoliert werden soll, führt der Nutzer das Kabel 4 bis zu dem Teilstrich mit der Millimeterangabe "12" in das Abisolierwerkzeug 1 ein.

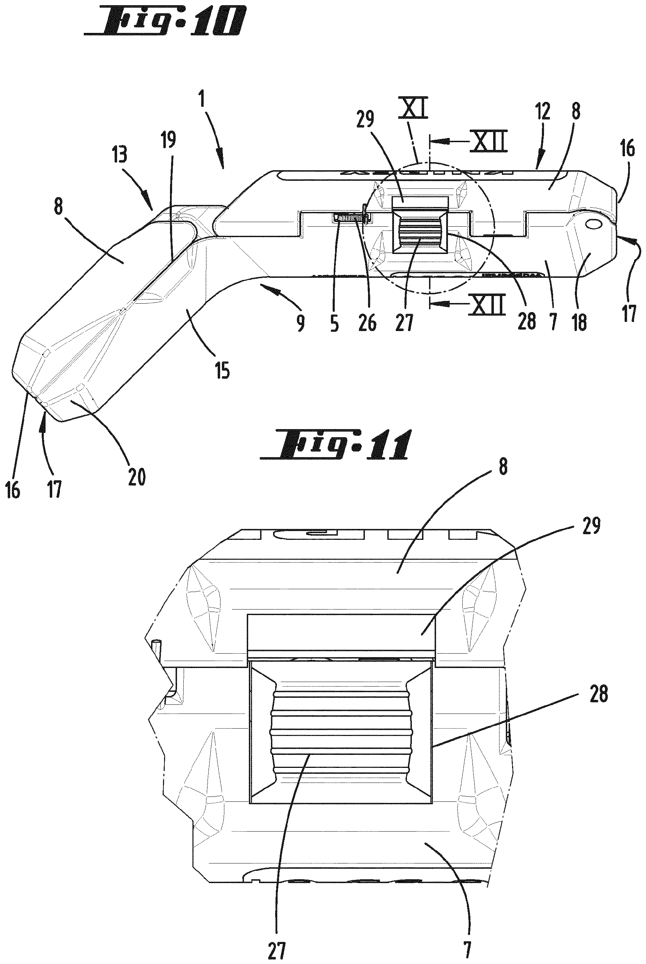

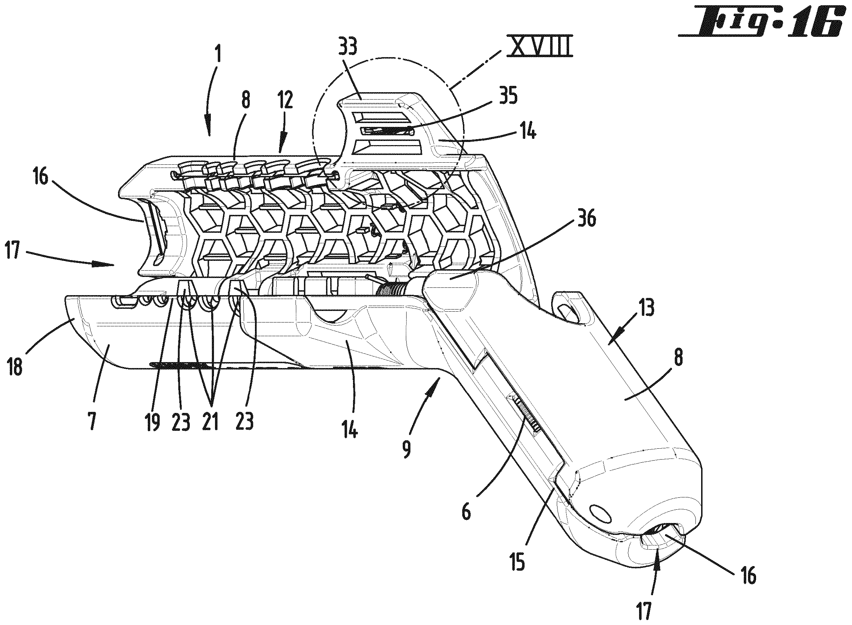

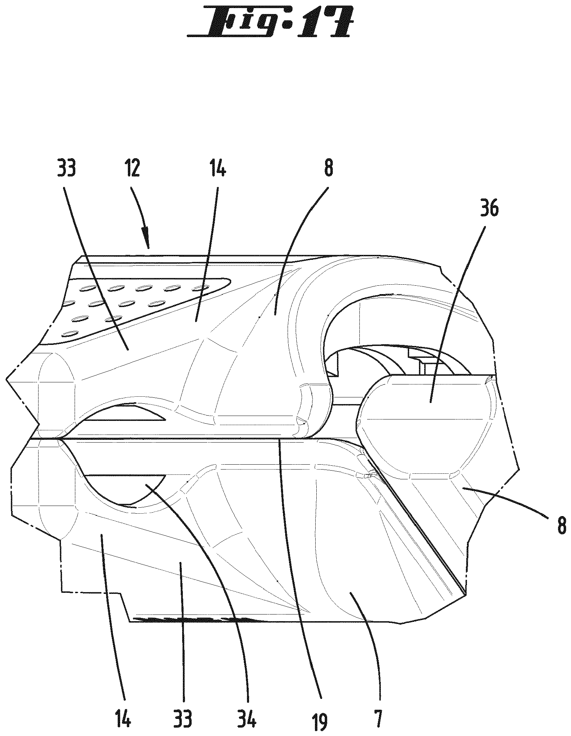

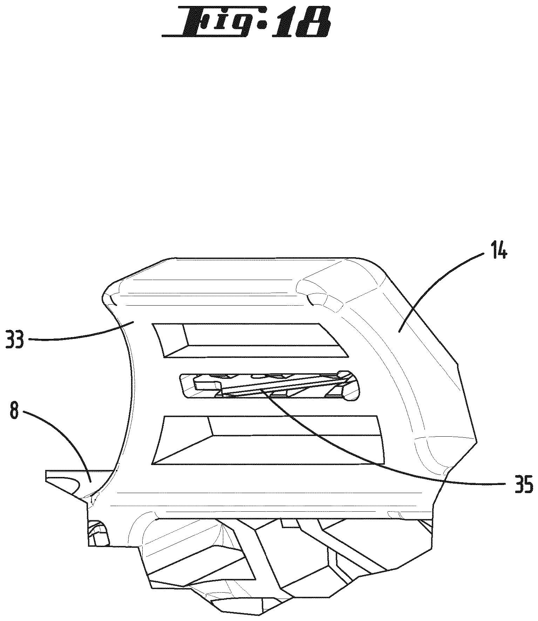

Die Figuren 10 bis 18 zeigen eine zweite Ausführungsform eines Abisolierwerkzeuges 1, welches im Wesentlichen auf der in den Figuren 1 bis 9 dargestellten Ausführungsform basiert.

In dem dargestellten Ausführungsbeispiel ist eine zweite Hohlkörperteilschale 8 an der ersten Hohlkörperteilschale 7 insbesondere in der Schalenverschlussstellung verriegelbar. Dargestellt ist eine solche Verriegelung im Zusammenhang mit dem Hohlkörperteilbereich 12. Darüber hinaus ist eine solche Verriegelung zusätzlich oder alternativ im Hohlkörperteilbereich 13 möglich.

Jede zweite Hohlkörperteilschale 8 ist um einen in Längsrichtung des jeweiligen Hohlkörperteilbereiches 12 bzw. 13 sich erstreckenden Achskörper 26 verschwenkbar. Dieser Achskörper 26 ist bevorzugt jeweils die Schwenkachse 5 bzw. 6 bildend randseitig der ersten Hohlkörperteilschale 7 gehaltert, wobei bevorzugt eine bezüglich der Längserstreckung des Abisolierwerkzeugs 1 insgesamt gegenüberliegende Anordnung der Achskörper 26 bzw. der Schwenkachsen 5 und 6 bevorzugt ist.

Die im Gelenkbereich aufeinander zu weisenden Randbereiche der ersten und zweiten Hohlkörperteilschalen 7 und 8 sind über die Längserstreckung betrachtet abwechselnd die geometrische Schwenkachse übergreifend ineinander verschachtelt.

In dem dargestellten Ausführungsbeispiel zugeordnet dem Hohlkörperteilbereich 12 ist ein schiebeverlagerbares Verriegelungsteil 27 vorgesehen. Dieses ist etwa mittig der Längserstreckung des Hohlkörperteilbereiches 13 scharnierseitig der Anordnung positioniert.

Das Verriegelungsteil 27 liegt zunächst in einer wandungsseitigen Vertiefung 28 der feststehenden Hohlkörperteilschale 7 ein. Diese Vertiefung 28 ist zur Trennebene zwischen der ersten Hohlkörperteilschale 7 und der verschwenkbaren zweiten Hohlkörperteilschale 8 hin gerichtet offen.

In Verlängerung der Vertiefung 28 ist bei geschlossener Hohlkörperteilschale 8 wandungsaußenseitig derselben eine Verriegelungsvertiefung 29 ausgebildet, die gleichfalls in Richtung auf die Trennebene geöffnet ist.

Das Verriegelungsteil 27 ist im Bereich einer senkrecht zur Erstreckung der geometrischen Schwenkachse ausgerichteten langlochartigen Ausnehmung 30 von dem zugeordneten Achskörper 26 durchsetzt. Hierdurch ist das Verriegelungsteil 27 bei im Wesentlichen annähernd tangentialen Verlagerbarkeit relativ zur Schwenkachse auf der Bodenfläche der Vertiefung 28 senkrecht zur Achsausrichtung geführt und darüber hinaus unverlierbar an dem Abisolierwerkzeug 1 gehaltert.

Die Betätigung bzw. Verlagerung des Verriegelungsteiles 27 kann, wie auch bevorzugt, einhändig, bspw. zufolge Daumenbeaufschlagung, erfolgen.

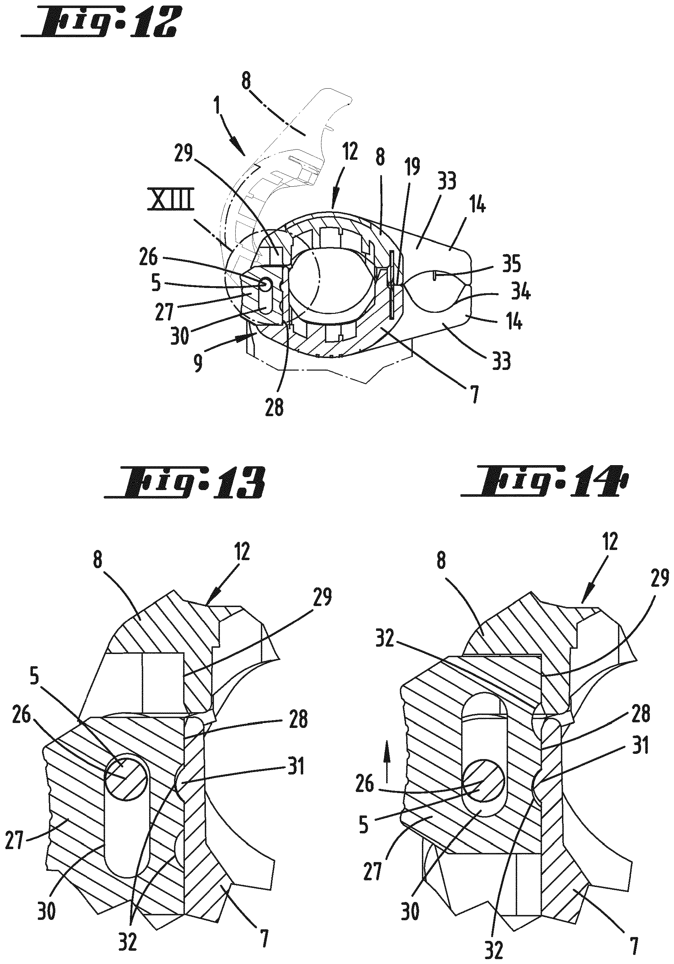

Durch eine Schiebeverlagerung aus einer wie in Figur 13 dargestellten Entriegelungsposition in eine Verriegelungsstellung gemäß Figur 14 quert das Verriegelungsteil 27 die Trennebene zwischen Hohlkörperteilschale 8 und Hohlkörperteilschale 7 im Scharnierbereich (dies bei geschlossenem Hohlkörperteilbereich) und taucht in den Bereich der Verriegelungsvertiefung 29 der abschwenkbaren zweiten Hohlkörperteilschale 8 ein. Es ist so eine Abstützung der Hohlkörperteilschale 8 in Öffnungsrichtung an dem Verriegelungsteil 27 gegeben.

Beide Riegelendstellungen können, wie bevorzugt und auch dargestellt, verrastet sein. Wie dargestellt, erfolgt eine solche Verrastung zwischen Verriegelungsteil 27 und der ersten Hohlkörperteilschale 7. Letztere weist der korrespondierenden Fläche des Verriegelungsteils 27 zugewandt im Bereich der Vertiefung 28 einen überlaufbaren Rastvorsprung 31 auf, der in der Ver- und Entriegelungsstellung in, in Verlagerungsrichtung zueinander distanzierte Rastvertiefungen 32 des Verriegelungsteiles 27 eintaucht.

Die nach außen gerichtete Oberfläche des Verriegelungsteils 27 kann ergonomisch günstig geformt sein, bspw. durch eine schalenartige Ausgestaltung. Darüber hinaus kann die Oberfläche, wie zeichnerisch angedeutet, eine Profilierung aufweisen, zur günstigen Kraftübertragung. Auch kann die Oberfläche zumindest partiell durch bspw. im 2-Komponenten-Spritzverfahren eingebrachte Weichkunststoffkomponenten greifsicherer ausgebildet sein.

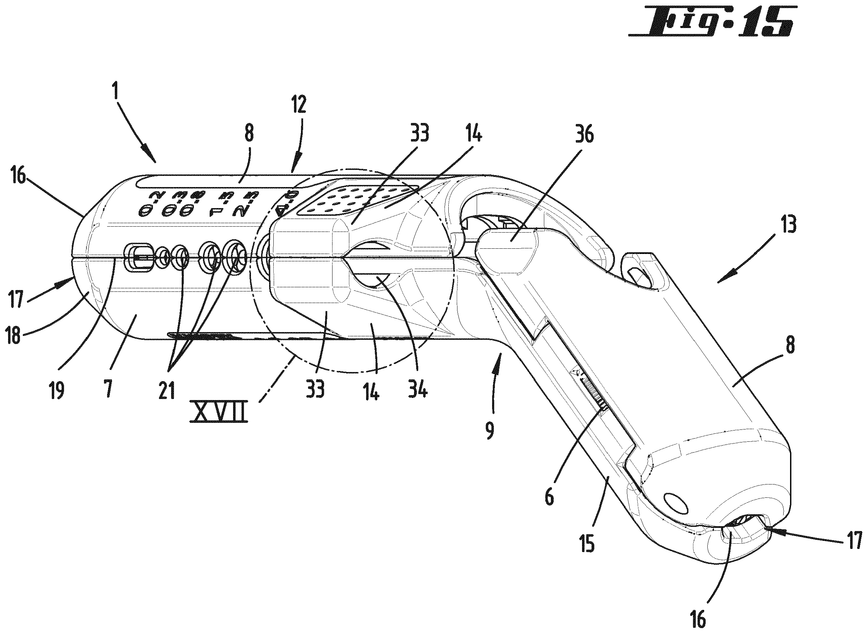

Solche bezüglich der Kraftübertragung günstige Ausgestaltung der Oberfläche kann des Weiteren auch im Bereich einer oder beider Angriffslaschen 14 vorgesehen sein (vgl. beispielsweise Figur 15).

Darüber hinaus können die Angriffslaschen 14 gemäß den Darstellungen in den Figuren 15 bis 18 nicht nur und ausschließlich der Belastung der zugeordneten Schalen in Richtung auf die Schließstellung dienen, sondern können auch eine Schneidfunktion aufweisen.

So sind die Angriffslaschen 14 als Funktionslaschen 33 gebildet. Auch diese ragen jeweils ausgehend von der ersten Hohlkörperteilschale 7 und der zweiten Hohlkörperteilschale 8 über die Umfangsfläche frei hinaus, dies abgewandt der Schwenkachse. Die Funktionslaschen 33 sind in dem dargestellten Ausführungsbeispiel im Hohlkörperteilbereich 12 ausgebildet.

Die Funktionslaschen 33 sind bei geschlossenen Hohlkörperteilschalen 7 und 8 (wie in Figur 15 dargestellt) in Überdeckung zueinander verbracht, wobei in dieser geschlossenen Stellung eine bevorzugt runde Durchsatzöffnung 34 geformt ist. Diese Durchsatzöffnung 34 ist bevorzugt jeweils hälftig durch eine entsprechende Ausnehmung im Bereich der aufeinander zu weisenden Flächen der Funktionslaschen 33 gebildet.

Die Durchsatzöffnung 34 erstreckt sich bei geschlossener Schalenstellung bevorzugt in Parallelausrichtung zu der geometrischen Schwenkachse des zugeordneten Hohlkörperteilbereiches. Des Weiteren ist die Durchsatzöffnung 34 so zwischen den Funktionslaschen 33 positioniert, dass mit Bezug auf einen Querschnitt quer zur Längserstreckung des Hohlkörperteilbereiches 12 gemäß der Darstellung in Figur 12 die Durchsatzöffnung 34 sich seitlich der Schalenwandung erstreckt.

Zumindest eine Funktionslasche 33 weist ein Schneidelement auf, bevorzugt die der abschwenkbaren zweiten Hohlkörperteilschale 8 zugeordnete Funktionslasche 33.

Die Schneide 35 des Schneidelementes ragt bei geschlossenen Schalen in die freie Querschnittsfläche der Durchsatzöffnung 34 ein und erstreckt sich hierbei im Wesentlichen in einer Ausrichtung gemäß der geometrischen Schwenkachse desselben Hohlkörperteilbereiches.

Die Durchsatzöffnung 34 mit dem die Schneide 35 aufweisenden Schneidelement wird bevorzugt genutzt zum Einschneiden der Ummantelung eines Kabels entlang der Längsausrichtung, dies, um die Abmantelung insbesondere über längere Kabellängen zu erleichtern. Bei einem solchen Schneidvorgang wird das Kabel durch die Durchsatzöffnung 34 gezogen.

Bei einer solchen Handhabung kann sich in axialer Verlängerung der Durchsatzöffnung im Hohlkörperteilbereich 13, insbesondere in einem korrespondierenden Abschnitt der diesbezüglichen Hohlkörperteilschale 8 eine Anlage des Kabels ergeben. Besonders günstig erweist sich in diesem Zusammenhang eine von außen zugängliche Führung 36 in Form einer Anlagenut, die an der Hohlkörperteilschale 8 des Hohlkörperteilbereiches 13 ausgebildet sein kann.

Obwohl die Figuren nur Ausführungsformen der Erfindung zeigen, versteht es sich von selbst, dass auch einzelne Untermerkmale miteinander kombiniert werden können. Beispielsweise können sowohl der erste Hohlkörperteilbereich 12 als auch der zweite Hohlkörperteilbereich 13 Schneidelemente 21 tragen. Die Orientierung der Schwenkachse 5, 6 relativ zu den Schalenkanten 19 ist ebenfalls variabel. Darüber hinaus kann das Abisolierwerkzeug an der Schalenkante 19 eines Hohlkörperteilbereiches 12, 13 sowohl eine Einbuchtung 20 als auch Schneidelemente 21 tragen. Darüber hinaus ist selbstverständlich auch ein konischer Endbereich 17 kombinierbar. Das Abisolierwerkzeug 1 kann als Rechtshänder- oder Linkshänder-Werkzeug ausgebildet sein, wobei gegebenenfalls die Schwenkachsen 5, 6 auf eine gegenüberliegende Schalenkante 19 zwischen den beiden Hohlkörperteilschalen 7, 8 verlegt werden. Weitere Kombinationen von Merkmalen sind denkbar.

### Liste der Bezugszeichen

| | | | |
|---|---|---|---|
| 1 | Abisolierwerkzeug | 26 | Achskörper |
| 2 | Außenmantel | 27 | Verriegelungsteil |
| 3 | Aderisolierung | 28 | Vertiefung |
| 4 | Kabel | 29 | Verriegelungsvertiefung |
| 5 | Schwenkachse | 30 | Ausnehmung |
| 6 | Schwenkachse | 31 | Rastvorsprung |
| 7 | Hohlkörperteilschale | 32 | Rastvertiefung |
| 8 | Hohlkörperteilschale | 33 | Funktionslasche |
| 9 | Hohlkörper | 34 | Durchsatzöffnung |
| 10 | Schneidelement | 35 | Schneide |
| 11 | Schneidkante | 36 | Führung |
| 12 | Hohlkörperteilbereich | | |
| 13 | Hohlkörperteilbereich | | |
| 14 | Angrifflasche | | |
| 15 | Grifffläche | | |
| 16 | Öffnung | | |
| 17 | Endbereich | | |
| 18 | Konus | | |
| 19 | Schalenkante | | |
| 20 | Einbuchtung | | |
| 21 | Schneidelementes | α | Winkel |
| 22 | Führungskulisse | β | Winkel |
| 23 | Steg | γ | Winkel |
| 24 | Teilführungskulisse | | |
| 25 | Markierung | | |

## Patentansprüche

1. Abisolierwerkzeug (1) zum Entfernen eines Außenmantels (2) und/oder einer Aderisolierung (3) eines elektrischen ein- oder mehradrigen Kabels (4), wobei das Abisolierwerkzeug (1) mittels einer gemeinsamen Schwenkachse (5, 6) miteinander verbundene Hohlkörperteilschalen (7, 8) aufweist, welche zur Bildung eines ein Kabel (4) zumindest teilweise aufnehmenden Hohlkörpers (9) aufeinander zu schwenkbar sind, wobei die Hohlkörperteilschalen (7, 8) an einer Schalenkante (19), an welcher die Hohlkörperteilschalen (7, 8) aufeinander zu schwenkbar sind, in Richtung der Schalenkante (19) nebeneinander angeordnete Schneidelemente (21) aufweisen, **dadurch gekennzeichnet, dass** den Schneidelementen (21) eine Führungskulisse (22) zugeordnet ist, welche mindestens einen seitlich zu einem Schneidelement (21) ausgebildeten Steg (23) zur Ausrichtung eines Kabels (4) an einem Schneidelement (21) aufweist, wobei im Falle von mehreren Stegen (23) diese in Richtung der Schalenkante (19) an gegenüberliegenden Seiten zweier Schneidelemente (21), insbesondere zweier nebeneinander liegender Schneidelemente (21), ausgebildet sind.

2. Abisolierwerkzeug (1) nach Anspruch 1, **dadurch gekennzeichnet, dass** die Führungskulisse (22) zwei an in einer Richtung senkrecht zu der Schalenkante (19) gegenüberliegenden Seiten der Schneidelemente (21) angeordnete Teilführungskulissen (24) aufweist.

3. Abisolierwerkzeug (1) nach einem der vorhergehenden Ansprüche, **dadurch gekennzeichnet, dass** die Führungskulisse nur an einer der beiden Hohlkörperteilschalen (7, 8) angeordnet ist.

4. Abisolierwerkzeug (1) nach einem der vorhergehenden Ansprüche, **dadurch gekennzeichnet, dass** die Stege der einer ersten Hohlkörperteilschale sich in Richtung der zweiten Hohlkörperteilschale erstrecken und größenmäßig über die Schneidelemente hervorstehen.

5. Abisolierwerkzeug (1) nach einem der vorhergehenden Ansprüche, **dadurch gekennzeichnet, dass** zumindest eine Hohlkörperteilschale (7, 8) eine in Einsteckrichtung eines Kabels (4) hinter einem Schneidelement (21) ausgebildete Markierung (25) aufweist, die einem Nutzer ein analoges Abmessen einer abzuisolierenden Einstecklänge ermöglicht, wobei, bevorzugt, die Markierung (25) dreidimensional körperlich ausgeformt ist.

6. Abisolierwerkzeug (1) nach einem der vorhergehenden Ansprüche, **dadurch gekennzeichnet, dass** ein erster Hohlkörperteilbereich (12, 13) über eine Umfangsfläche hinausragende Funktionslaschen (33) aufweist, wobei zumindest eine Funktionslasche (33) ein Schneidelement mit einer sich in Richtung der Schwenkachse (5, 6) erstreckenden Schneide (35) aufweist.

7. Abisolierwerkzeug nach Anspruch 6, **dadurch gekennzeichnet, dass** die Funktionslaschen (33) zumindest im Bereich der Schneide (35) bei geschlossenen Hohlkörperteilschalen (7, 8) in Überdeckung zueinander sind.

8. Abisolierwerkzeug nach einem der Ansprüche 6 oder 7, **dadurch gekennzeichnet, dass** die Funktionslaschen (33) als Angriffslaschen (14) ausgebildet sind.

9. Abisolierwerkzeug nach einem der Ansprüche 6 bis 8, **dadurch gekennzeichnet, dass** die Funktionslaschen (33) in geschlossenem Zustand eine Durchsatzöffnung (34) belassen.

10. Abisolierwerkzeug nach Anspruch 9, **dadurch gekennzeichnet, dass** in axialer Verlängerung der Durchsatzöffnung (34) an dem Gehäuse eine Führung (36) für das Kabel (4) ausgeformt ist.

11. Abisolierwerkzeug nach einem der vorhergehenden Ansprüche, **dadurch gekennzeichnet, dass** das Abisolierwerkzeug (1) mindestens zwei mit einem Winkel (α) zwischen ungefähr 90° und 170°, insbesondere zwischen 110° und 150°, zueinander angeordnete Hohlkörperteilbereiche (12, 13) aufweist, wobei zumindest ein erster Hohlkörperteilbereich (12, 13) zwei zueinander schwenkbewegliche Hohlkörperteilschalen (7, 8) aufweist, von welchen zumindest eine Hohlkörperteilschale (7, 8) ohne Verlagerung eines zweiten Hohlkörperteilbereiches (13, 12) verschwenkbar ist.

12. Abisolierwerkzeug nach einem der vorhergehenden Ansprüche, **dadurch gekennzeichnet, dass** der von den beiden Hohlkörperteilschalen (7, 8) gebildete Hohlkörper (9) zumindest in Bezug auf einen Endbereich (17) in seiner Außenkontur einen Konus (18) aufweist, welcher sich in Richtung einer Grifffläche (15) des Abisolierwerkzeugs (1) aufweitet.

13. Abisolierwerkzeug (1) nach Anspruch 12, **dadurch gekennzeichnet, dass** eine Umfangsfläche des Konus (18) einen Winkel (β) von ungefähr 30° bis 60° zu einer Stirnfläche des Endbereiches (17) aufweist.

14. Abisolierwerkzeug nach einem der Ansprüche 12 oder 13, **dadurch gekennzeichnet, dass** der Konus (18) ausgehend von einer Stirnfläche des Endbereiches (17) über eine Länge von 5 mm bis 20 mm ausgebildet ist.

15. Abisolierwerkzeug (1) nach einem der vorhergehenden Ansprüche, **dadurch gekennzeichnet, dass** der Hohlkörper (9) an der Schalenkante (19), an welcher die Hohlkörperteilschalen (7, 8) aufeinander zu schwenkbar sind, eine Einbuchtung (20) zum Eindrücken eines Kabels (4) in den Hohlkörper (9) aufweist, welche Einbuchtung (20) insbesondere einen Öffnungswinkel (γ) kleiner als 180° aufweist.

## Claims

1. Stripping tool (1) for removing an outer sheath (2) and/or core insulation (3) of an electrical single-core or multi-core cable (4), the stripping tool (1) comprising hollow body shells (7, 8) which are interconnected by means of a common pivot pin (5, 6) and can be pivoted towards one another to form a hollow body (9), which accommodates a cable (4) at least in part, the hollow body shells (7, 8) having, on a shell edge (19) on which the hollow body shells (7, 8) can be pivoted towards one another, cutting elements (21) arranged next to one another in the direction of the shell edge (19), **characterised in that** the cutting elements (21) are assigned a guide slot (22) which has at least one web (23) formed laterally with respect to a cutting element (21) for aligning a cable (4) on a cutting element (21), and in the case of a plurality of webs (23), these being formed in the direction of the shell edge (19) on opposite sides of two cutting elements (21), in particular of two cutting elements (21) that lie next to one another.

2. Stripping tool (1) according to claim 1, **characterised in that** the guide slot (22) has two partial guide slots (24) arranged on opposite sides of the cutting elements (21) in a direction perpendicular to the shell edge (19).

3. Stripping tool (1) according to either of the preceding claims, **characterised in that** the guide slot is arranged on only one of the two hollow body shells (7, 8).

4. Stripping tool (1) according to any of the preceding claims, **characterised in that** the webs of a first hollow body shell extend in the direction of the second hollow body shell and protrude in size over the cutting elements.

5. Stripping tool (1) according to any of the preceding claims, **characterised in that** at least one hollow body shell (7, 8) has a marking (25) formed in the insertion direction of a cable (4) behind a cutting element (21), which marking enables a user to analogously measure an insertion length to be stripped, the marking (25) preferably having a three-dimensional physical shape.

6. Stripping tool (1) according to any of the preceding claims, **characterised in that** a first hollow body region (12, 13) has functional tabs (33) projecting beyond a peripheral surface, at least one functional tab (33) having a cutting element comprising a cutting edge (35) which extends in the direction of the pivot pin (5, 6).

7. Stripping tool according to claim 6, **characterised in that** the functional tabs (33) overlap one another at least in the region of the cutting edge (35) when the hollow body shells (7, 8) are closed.

8. Stripping tool according to either claim 6 or claim 7, **characterised in that** the functional tabs (33) are designed as engagement tabs (14).

9. Stripping tool according to any of claims 6 to 8, **characterised in that** the functional tabs (33) leave a throughput opening (34) when closed.

10. Stripping tool according to claim 9, **characterised in that** a guide (36) for the cable (4) is formed on the housing in the axial extension of the throughput opening (34).

11. Stripping tool according to any of the preceding claims, **characterised in that** the stripping tool (1) has at least two hollow body regions (12, 13) arranged at an angle (α) from one another of between approximately 90° and 170°, in particular between 110° and 150°, at least one first hollow body region (12, 13) having two hollow body shells (7, 8) that can pivot relative to one another, of which at least one hollow body shell (7, 8) can be pivoted without a second hollow body region (13, 12) being moved.

12. Stripping tool according to any of the preceding claims, **characterised in that** the hollow body (9) formed by the two hollow body shells (7, 8) comprises a cone (18) in its outer contour, at least with respect to an end region (17), which cone widens in the direction of a gripping surface (15) of the stripping tool (1).

13. Stripping tool (1) according to claim 12, **characterised in that** a peripheral surface of the cone (18) is at an angle (β) of approximately 30° to 60° from an end face of the end region (17).

14. Stripping tool according to either claim 12 or claim 13, **characterised in that** the cone (18) is formed, starting from an end face of the end region (17), over a length of from 5 mm to 20 mm.

15. Stripping tool (1) according to any of the preceding claims, **characterised in that** the hollow body (9) has, on the shell edge (19) on which the hollow body shells (7, 8) can be pivoted towards one another, an indentation (20) for pressing a cable (4) into the hollow body (9), which indentation (20) in particular has an opening angle (γ) smaller than 180°.

## Revendications

1. Outil de dénudage (1) pour enlever une gaine extérieure (2) et/ou une isolation de conducteur (3) d'un câble électrique (4) à un ou plusieurs conducteurs, dans lequel l'outil de dénudage (1) présente des coques partielles de corps creux (7, 8) qui sont reliées entre elles par un axe de pivotement commun (5, 6) et qui peuvent pivoter l'une/les unes vers l'autre/les autres pour former un corps creux (9) de réception au moins partielle d'un câble (4), dans lequel les coques partielles de corps creux (7, 8) présentent des éléments de coupe (21) agencés à un bord de coque (19) au niveau duquel les coques partielles de corps creux (7, 8) peuvent pivoter l'une/les unes vers l'autre/les autres, les éléments de coupe étant agencés côte à côte dans la direction du bord de coque (19), **caractérisé en ce qu'**aux éléments de coupe (21) est associée une coulisse de guidage (22) qui présente au moins une nervure (23) formée latéralement par rapport à un élément de coupe (21) pour l'orientation d'un câble (4) sur un élément de coupe (21), dans lequel, dans le cas d'une pluralité de nervures (23), celles-ci sont formées dans la direction du bord de coque (19) sur des côtés opposés de deux éléments de coupe (21), en particulier deux éléments de coupe (21) situés côte à côte.

2. Outil de dénudage (1) selon la revendication 1, **caractérisé en ce que** la coulisse de guidage (22) comporte deux coulisses de guidage partielles (24) agencées sur des côtés opposés des éléments de coupe (21) dans une direction perpendiculaire au bord de coque (19) .

3. Outil de dénudage (1) selon l'une des revendications précédentes, **caractérisé en ce que** la coulisse de guidage est agencée uniquement sur l'une des deux coques partielles de corps creux (7, 8).

4. Outil de dénudage (1) selon l'une des revendications précédentes, **caractérisé en ce que** les nervures de la première coque partielle de corps creux s'étendent en direction de la deuxième coque partielle de corps creux et dépassent en taille les éléments de coupe.

5. Outil de dénudage (1) selon l'une des revendications précédentes, **caractérisé en ce qu'**au moins une coque partielle de corps creux (7, 8) présente un marquage (25) formé derrière un élément de coupe (21) dans la direction d'insertion d'un câble (4), lequel marquage permet à un utilisateur une mesure analogue d'une longueur d'insertion à dénuder, le marquage (25) étant de préférence physiquement formé en trois dimensions.

6. Outil de dénudage (1) selon l'une des revendications précédentes, **caractérisé en ce qu'**une première région partielle de corps creux (12, 13) présente des pattes fonctionnelles (33) faisant saillie au-delà d'une surface périphérique, dans lequel au moins une patte fonctionnelle (33) présente un élément de coupe avec une arête de coupe (35) s'étendant en direction de l'axe de pivotement (5, 6).

7. Outil de dénudage selon la revendication 6, **caractérisé en ce que** les pattes fonctionnelles (33) sont en relation de chevauchement entre elles au moins dans la région de l'arête de coupe (35) lorsque les coques partielles de corps creux (7, 8) sont fermées.

8. Outil de dénudage selon l'une des revendications 6 ou 7, **caractérisé en ce que** les pattes fonctionnelles (33) sont réalisées sous la forme de pattes d'attaque (14).

9. Outil de dénudage selon l'une des revendications 6 à 8, **caractérisé en ce que** les pattes fonctionnelles (33) à l'état fermé laissent une ouverture de passage (34).

10. Outil de dénudage selon la revendication 9, **caractérisé en ce qu'**un guide (36) pour le câble (4) est formé au niveau du boîtier dans le prolongement axial de l'ouverture de passage (34).

11. Outil de dénudage selon l'une des revendications précédentes, **caractérisé en ce que** l'outil de dénudage (1) présente au moins deux régions partielles de corps creux (12, 13) agencées l'une par rapport à l'autre selon un angle (α) compris entre environ 90° et 170°, en particulier entre 110° et 150°, dans lequel au moins une première région partielle de corps creux (12, 13) présente deux coques partielles de corps creux (7, 8) pouvant pivoter l'une par rapport à l'autre dont au moins une coque partielle de corps creux (7, 8) peut pivoter sans déplacement d'une deuxième région partielle de corps creux (13, 12).

12. Outil de dénudage selon l'une des revendications précédentes, **caractérisé en ce que** le corps creux (9) formé par les deux coques partielles de corps creux (7, 8) présente dans son contour extérieur, au moins par rapport à une zone d'extrémité (17), un cône (18) qui s'élargit en direction d'une surface de préhension (15) de l'outil de dénudage (1).

13. Outil de dénudage (1) selon la revendication 12, **caractérisé en ce qu'**une surface périphérique du cône (18) présente un angle (β) d'environ 30° à 60° par rapport à une face frontale de la zone d'extrémité (17).

14. Outil de dénudage selon l'une des revendications 12 ou 13, **caractérisé en ce que** le cône (18) est formé à partir d'une face frontale de la zone d'extrémité (17) sur une longueur de 5 mm à 20 mm.

15. Outil de dénudage (1) selon l'une des revendications précédentes, **caractérisé en ce que** le corps creux (9) présente au bord de coque (19) au niveau duquel les coques partielles de corps creux (7, 8) peuvent pivoter l'une vers l'autre, un renfoncement (20) pour enfoncer un câble (4) dans le corps creux (9), lequel renfoncement (20) présente en particulier un angle d'ouverture (γ) inférieur à 180°.
